Europäisches Patentamt

European Patent Office

Office européen des brevets

(11) Publication number: **0 200 273**
**A1**

# EUROPEAN PATENT APPLICATION

(21) Application number: 86200717.6

(22) Date of filing: 28.04.86

(51) Int. Cl.⁴: **A 01 B 29/04**
**A 01 B 49/02**

(30) Priority: 29.04.85 NL 8501212

(43) Date of publication of application:
05.11.86 Bulletin 86/45

(84) Designated Contracting States:
DE FR GB NL

(71) Applicant: C. van der Lely N.V.
Weverskade 10 P.O. Box 26
NL-3155 ZG Maasland(NL)

(72) Inventor: van der Lely, Ary
10A Weverskade
Maasland(NL)

(72) Inventor: Bom, Cornelis Johannes Gerardus
16 Laan van Nieuw Rozenburg
Rozenburg(NL)

(74) Representative: Mulder, Herman et al,
Octrooibureau Van der Lely N.V. Weverskade 10 P.O. Box
26
NL-3155 ZG Maasland(NL)

(54) A soil cultivating machine.

(57) The invention relates to a soil cultivating machine comprising a number of soil working members (3) arranged adjacently in a row, and a packer roller (14) situated therebehind, said roller (14) being fitted at the rear with scraping elements (17) mounted by means of upwardly directed arms (19) on a supporting structure (24). The supporting structure comprises at least two supports (20, 22) situated above one another when seen in the machine's intended direction of travel (A), the lowermost support (20) being provided with the arms (19) for the scraping elements (17). The upper support (22) is situated substantially directly above a scraping element (17).

FIG.2

EP 0 200 273 A1

A SOIL CULTIVATING MACHINE

The invention relates to a soil cultivating machine comprising a number of soil working members, arranged adjacently in a row, and a packer roller situated therebehind, said roller being fitted at the rear with scraping elements mounted by means of upwardly directed arms on a supporting structure, which supporting structure comprises at least two supports situated above one another when seen in the machine's intended directed of travel, the lowermost support being provided with the arms for the scraping elements.

Soil cultivating machines of this kind have a supporting structure for the scraping elements, which structure is situated relatively far to the rear, as a result of which the fitting of combination implements, in particular when using a packer roller of large diameter, offers no difficulties.

According to the invention, a supporting structure is suggested wherein the upper support is situated substantially directly above a scraping element. Hereby, an arrangement of the supporting structure is obtained in such a way that it does not constitute a hindrance for combining the machine with other implements, such as a seed drill.

For a better understanding of the invention and to show how the same may be carried into effect, reference will now be made, by way of example, to the accompanying drawings, in which:

Figure 1 is a plan view of a soil cultivating

achine comprising a packer roller of a design according to the invention;

Figure 2 is, to an enlarged scale, a view in the direction indicated by arrow II in Figure 1; and

Figure 3 is a view in the direction indicated by arrow III in Figure 2.

The apparatus as shown in the drawings concerns a soil cultivating machine, in particular for preparing a seed bed, comprising a box-like frame portion 1 extending transversely to the intended direction of travel A. In the box-like frame portion 1, shafts 2 are arranged in bearings at equal interspacings of, preferably, 25 centimeters, which shafts extend in an upward, preferably vertical, direction. Each of the shafts 2 is equipped, directly underneath the frame portion 1, with a soil working member 3 comprising a support 4, which extends at least in a substantially horizontal direction, and soil working elements 5 of a tine-like formation mounted on the ends of the support thereby extending downwardly.

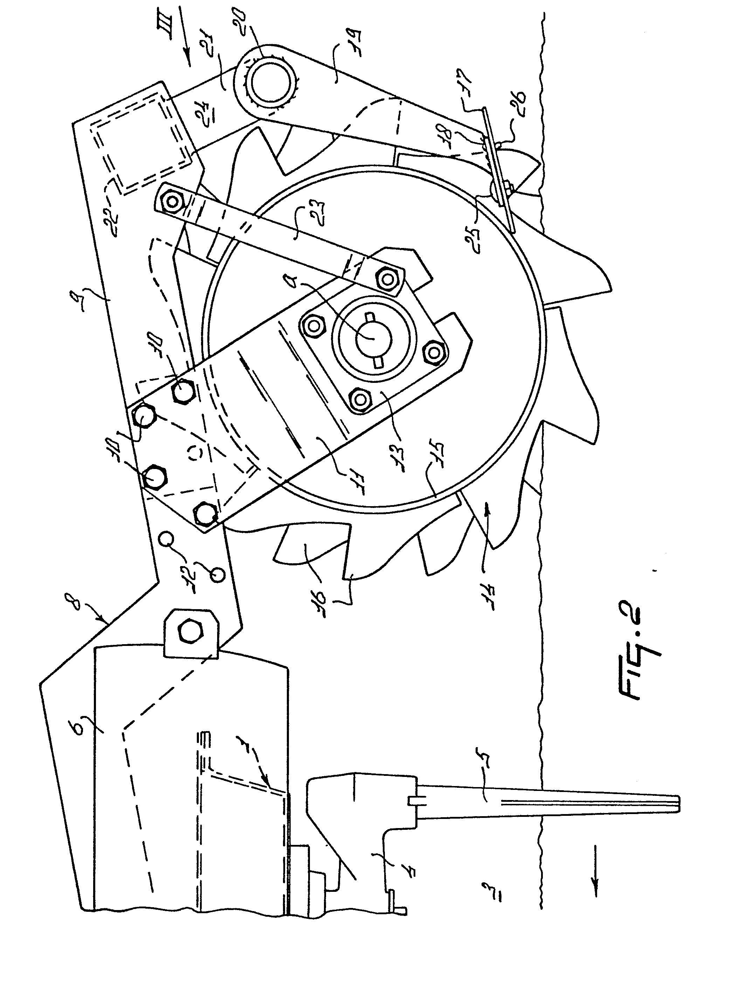

The extremities of the frame portion 1 are provided with plates 6 extending upwardly and reaching above said frame portion 1. Near the leading and top side, each plate 6 is provided with a pivot 7, about which an arm 8 is pivotable, which arm extends rearwardly along the inner side of the plate. Near the rear side of a plate 6, each arm 8 has a part which is directed obliquely down- and rearwardly and which merges in a segment 9, which extends at least substantially parallel to the part of the arm 8 that extends along a plate 6 (Figure 2). Each of the arms 8 is adjustable in height by means of a screw spindle 3A situated near the rear side of the frame portion 1.

A support 11, extending obliquely in a downward and rearward direction, is mounted on the part 9 of each arm 8 by means of bolts 10. By means of holes 12, the support 11 can be adjusted in a more forward position. A packer roller 14 is fitted, freely rotatably, between the ends of the supports 11 by means of bearings lodged in bearing housings 13. The packer roller 14 comprises a cylindrical support 15.

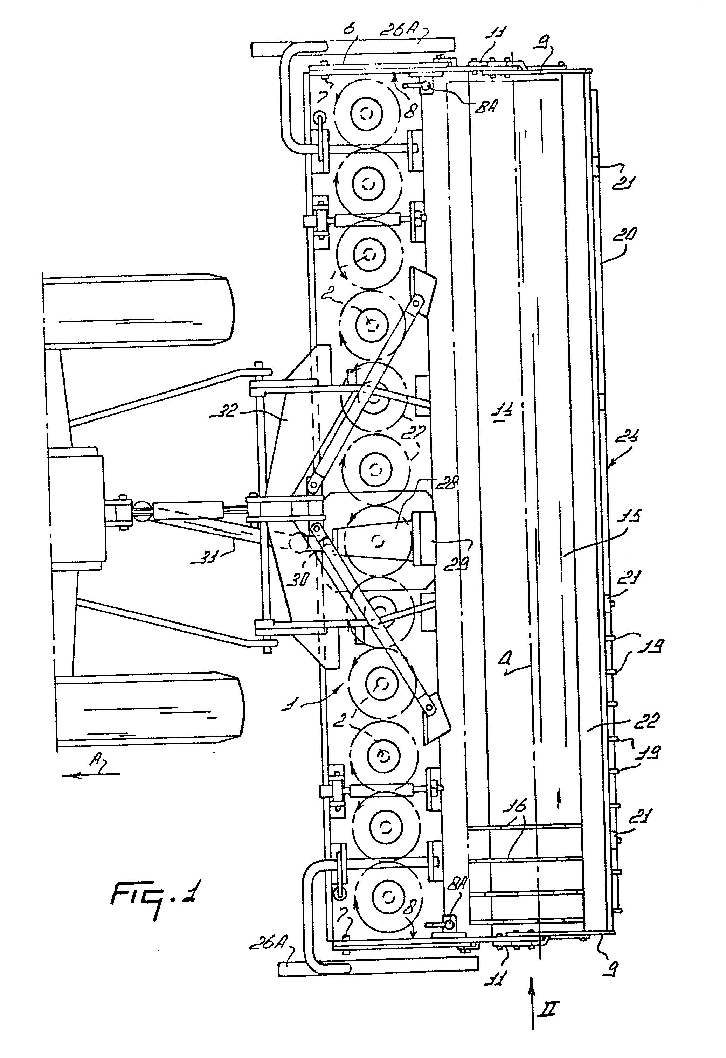

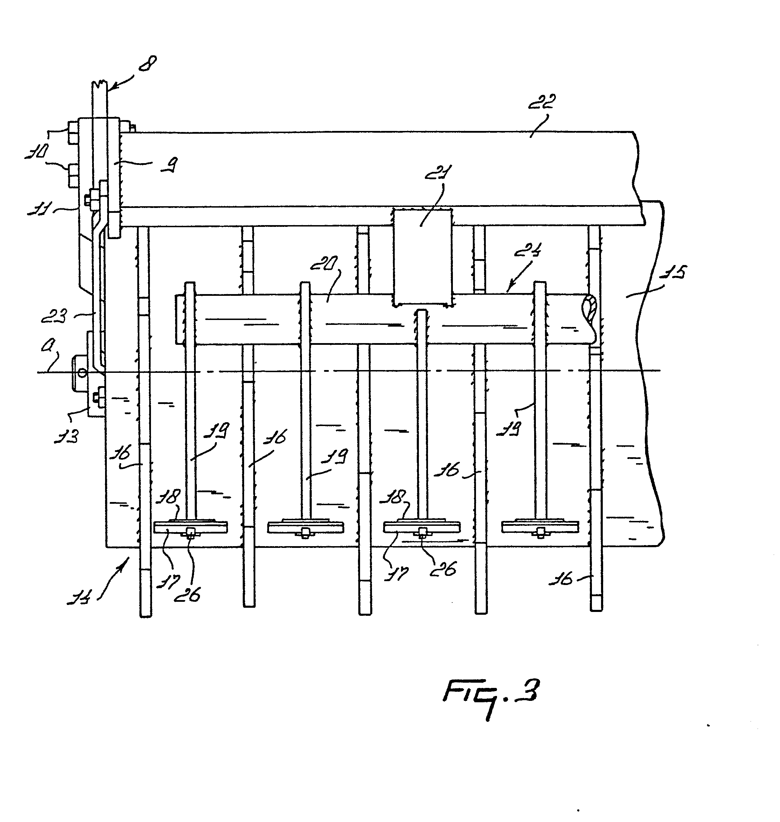

Welded to the circumference of the cylindrical support 15 are adjoining pairs of tine-like projections 16, the arrangement being such that groups of tine-like projections are formed, the said groups being situated at, at least substantially, equal interspaces (Figures 1 and 3). The broadest side of the tine-like projections 16 extends at least substantially parallel to a plane perpendicular to the axis of rotation a of the packer roller 14. The size of the cylindrical support 15 and the height of the tine-like projections 16 are such, that the diameter of the roller is approximately 50 centimeters. Scraping elements 17 are mounted between the consecutive groups of tine-like projections 16. Each scraping element is constituted by a rectangular plate, preferably manufactured from spring steel. A scraping element 17 is mounted, by means of a base 18, on the lowermost side of a support 19 constituted by a flat strip and extending obliquely in a rearward and upward direction. Said strip is arranged in such a way that its broadest side extends substantially parallel to the intended direction of travel A. The width of each strip-shaped support 19 increases from the lowermost side in an upward direction. Each strip-shaped support 19 has, near the upper side, a circular aperture, the arrangement being such that the respective strip-shaped supports are slidable about a tubular support 20 with a round cross-section, after which the supports can be welded, once the correct position of the scraping elements has been adjusted (Figures 2 and 3). The tubular support 20 extends at least substantially parallel to the axis of rotation a of the roller 14. Between the extremities, the tubular support 20 is provided with supports 21 directed upwardly and fitted to a tubular transverse support 22, which support, in the embodiment shown, has an angular, preferably square, cross-section and extends parallel to the tubular support 20. The transverse support 22 is mounted between the extremities of the segments 9 of the arms 8 in such a way that the upright sides incline slightly forwardly from the lowermost side (Figure 2). The diamater of the transverse support 22 is

- 4 -

0200273

'arger than that of the tubular support 20.

A reinforcement strip 23 is mounted between the extremities of each of the segments 9 and the lowermost end of a support 11.

The tubular support 20 constitutes, together with the transverse support 22 situated above same, a supporting structure 24 for the roller, said structure being within the roller's circumference and in the upper, hindmost quadrant, seen in the intended direction of travel and with the parts 9 of the arms 8 being in a horizontal or a virtually horizontal position. Both the tubular support 20 and the transverse support 22 are then in the near vicinity of the trajectory described by the extremities of the tine-like projections 16. The longitudinal centre line of the tubular support 20 lies at a circumferential angle of $\pm$ 10° above a horizontal plane through the axis of rotation $a$ of the roller 14, while the longitudinal centre line of the transverse support 22 lies at a circumferential angle of $\pm$ 40° above the said plane. Through the application of the combination of transverse support 22 and tubular support 20 not only an efficient support for the scraping elements 17 is obtained, but at the same time a convenient fixation of the said elements. The arrangement of both supports is of such a nature that a compact construction is possible, without constituting an impediment for mounting other implements to the machine, such as e.g. a seed drill. As is apparent from Figure 2, the upper support 22 is situated substantially directly above a scraping element 17.

Each of the scraping elements 17 is situated at a point against the cylindrical support 15 at a circumferential angle of $\pm$ 65° with the horizontal plane through the axis of rotation $a$ of the roller 14. The scraping element 17 is then in a virtually horizontal position (Figure 2). Each rectangular scraping element 17 comprises two apertures, the lowermost of which is provided for fitting a bolt 25 in order to mount the scraping element to the base 18, while the upper recess allows a co-operation with a pin 26 on the base, the entire assembly being so arranged that, after unfastening the bolt 25, the rectangular plate can be reversed, whereby the opening for the bolts 25 allows a co-operation with the pin 26, while in the opening for the pin 26 the fastening bolt 25 can be inserted. The extremities of the frame portion 1 are equipped with a pivotable plate 26A, which is rotatable by means of an arm about an axle extending in the intended direction of travel; said plate permits a co-operation with an outer soil working member during machine operation.

Within the box-like frame portion 1, each shaft 2 is provided with a pinion 27, the arrangement being such that the pinions on the shafts 2 of adjacent soil working members 3 are in mesh with each other. Near the middle of the frame portion 1, the shaft of a soil working member 3 is extended and projects into a gearbox 28, which is mounted on the frame portion's upper side. Within the gearbox 28, the extension of said shaft is engaged, through a conical gear transmission, in a driving relation with a shaft extending in the intended direction of travel A and projecting at the rear side into the housing of a variable speed gear 29 and being engaged, within this housing, through the intermediary of change gears, in a driving relation with a shaft 30, situated above said shaft, also extending in the intended direction of travel and protruding from the gearbox at the front side. The shaft 30 can be coupled to the power take-off shaft of a tractor by means of an intermediate shaft 31. Near the front side, the frame portion 1 is provided with a trestle 32 for coupling the machine to the three-point lift hitch of a tractor.

The performance of the machine as described before is as follows.

During operation, the machine is coupled by means of the trestle 32 to the three-point lift hitch of a tractor and each of the soil working members 3 can be made to rotate from the tractor power take-off shaft through the transmission described, the arrangement being such that adjacent soil working members rotate in opposite directions, during which their soil working elements 5 work at least adjoining strips of soil. By means of the packer roller 14 the working depth of the soil working elements can be set by adjusting the arms 8 with the aid of the screw spindles 8A fitted to the rear side of the frame portion. During machine travel, the packer roller 14 is made to rotate by means of the tine-like projections 16 constituting cams, whereby the circumference of the cylindrical support 15 exerts a compacting effect on the soil cultivated previously. In this way, a pre-eminently suitable seed bed, slightly compacted, can be created, said bed offering optimum conditions for seed germination.

With the aid of the scraping elements 17, soil can be kept from clogging during operation between the tine-like projections 16, such clogging causing the roller's performance to go to waste. The lowermost side of the scraping elements 17 bears against the cylindrical support 15 at a point, situated so low, that adherent soil is scraped off immediately, so that it cannot in any way pose an impediment to the germination of the seed. Because the lowermost tubular support 20 and the transverse support 22, situated above said support, together constituting the supporting structure 24, are disposed above one another and in the immediate vicinity of the circumference of the packer roller, while the supporting structure, seen in rear view, is situated virtually within the roller's circumference, this supporting structure does not constitute an impediment for a compact structure and for linking an implement to be combined with the machine. Moreover, a simple adjustment and fixation of the scraping elements can be obtained, since the strip-shaped supports 19 can be strung onto the tubular support and welded after adjustment of the scrapers. On account of the fact that the broadest side of the strip-shaped supports is situated in the intended direction of travel and that, moreover, the width of these supports tapers downwardly, a clogging caused by material carried along, e.g. weeds, is counteracted.

CLAIMS

1.        A soil cultivating machine comprising a number of soil working members (3),  arranged adjacently in a row, and a packer roller (14) situated therebehind,  said roller (14) being fitted at the rear with scraping elements (17) mounted by  means  of  upwardly directed arms (19) on  a  supporting structure  (24), which  supporting structure  comprises  at least two supports (20,  22) situated above one another when seen  in the machine's intended direction of travel (A),  the lowermost support (20) being provided with the arms (19) for the scraping elements (17),  characterized in that the upper support  (22)  is situated substantially  directly  above  a scraping element (17).

2.        A soil cultivating machine as claimed in claim 1, characterized in that the supporting structure (24), seen in the intended direction of travel (A),  is situated virtually within the circumference of the packer roller (14).

3.        A  soil cultivating machine as claimed in claim 1 or 2,  characterized in that the supporting structure  (24), seen  in the intended direction of travel (A),  is  situated within  the  upper,  hindmost quadrant  of  the  roller's circumference.

4.        A soil cultivating machine as claimed in any  one of the preceding claims, characterized in that both supports (20,  22)  are  situated in the vicinity of  the  trajectory described  by  the extremities of the tine-like  projections (16) of the packer roller (14).

5.        A soil cultivating machine as claimed in any  one of  the  preceding claims,  characterized in that the  upper support (22) has a rectangular cross-section and is arranged in  such a manner that the upright sides  incline  forwardly from the lowermost side.

6.    .    A  soil cultivating machine as claimed in any one of the preceding claims,  characterized in that the diameter of  the  upper  support  (22) is  larger  than  that  of  the lowermost support (20).

7.        A soil cultivating machine as claimed in any  one of  the  preceding  claims,  characterized  in  that    the

0200273

lowermost support (20) has an at least substantially round cross-section.

8.    A soil cultivating machine as claimed in claim 7, characterized in that the scraping elements (17) are mounted on strip-shaped arms (19) which totally embrace the tubular support (20).

9.    A soil cultivating machine as claimed in claim 8, characterized in that the strip-shaped arms (19) are broader on the uppermost side than on the lowermost side.

10.    A soil cultivating machine as claimed in claim 7 or 8, characterized in that the broadest side of the strip-shaped arms (19) is directed in the intended direction of travel.

11.    A soil cultivating machine as claimed in any one of the preceding claims, characterized in that a scraping element (17) is in a virtually horizontal position during operation.

12.    A soil cultivating machine as claimed in any one of the preceding claims, characterized in that a scraping element (17) bears against the cylindrical support (15) of the packer roller (14) at a point situated at a circumferential angle of ± 65° under a horizontal plane through the roller's axis of rotation.

FIG.1

FIG.2

0200273

FIG.3

# EUROPEAN SEARCH REPORT

Application number

EP 86 20 0717

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | GB-A-1 587 747 (VAN DER LELY)<br>* Page 4, lines 17-84; figures 2,3 *<br><br>--- | 1-4 | A 01 B 29/04<br>A 01 B 49/02 |
| A | GB-A-2 137 061 (VAN DER LELY)<br><br>* Page 2, lines 35-92; figures 1,2 *<br><br>----- | 2,4,5,<br>6,11,<br>12 | |

TECHNICAL FIELDS
SEARCHED (Int Cl 4)

A 01 B

The present search report has been drawn up for all claims

| Place of search | Date of completion of the search | Examiner |
|---|---|---|
| THE HAGUE | 13-06-1986 | VERDOODT S.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82